# EUROPÄISCHE PATENTSCHRIFT

(11) **EP 3 003 975 B1**
(45) Veröffentlichungstag und Bekanntmachung des Hinweises auf die Patenterteilung: **12.04.2017**
(21) Anmeldenummer: 14726337.0
(22) Anmeldetag: 21.05.2014
(51) Int. Cl.: C01B 33/027, C01B 33/029, C01B 33/03

(54) **VERFAHREN ZUR HERSTELLUNG VON GRANULAREM POLYSILICIUM**
METHOD FOR PRODUCING GRANULAR POLYSILICON
PROCÉDÉ DE PRODUCTION DE POLYSILICIUM GRANULAIRE

(30) Priorität: 29.05.2013 DE 102013210039
(43) Veröffentlichungstag der Anmeldung: 13.04.2016
(73) Patentinhaber: Wacker Chemie AG, 81737 München (DE)
(72) Erfinder: PEDRON, Simon, 84489 Burghausen (DE)
(74) Vertreter: Potten, Holger
(86) Internationale Anmeldenummer: PCT/EP2014/060425
(87) Internationale Veröffentlichungsnummer: WO 2014/191274

(56) Entgegenhaltungen:
- EP-A1- 2 179 965
- EP-A1- 2 338 835
- WO-A1-2011/137506
- WO-A2-96/41036
- DE-A1- 3 842 099
- DE-A1-102005 005 235
- JP-A- H06 127 924

## Beschreibung

Die Erfindung betrifft Verfahren zur Herstellung von granularem Polysilicium.

Polykristallines Siliciumgranulat oder kurz Polysilicium-Granulat ist eine Alternative zum im Siemens-Verfahren hergestellten Polysilicium. Während das Polysilicium im Siemens-Verfahren als zylindrischer Siliciumstab anfällt, der vor seiner Weiterverarbeitung zeit- und kostenaufwändig zu so genanntem Chippoly zerkleinert und ggf. wiederum gereinigt werden muss, besitzt Polysilicium-Granulat Schüttguteigenschaften und kann direkt als Rohmaterial z. B. zur Einkristallerzeugung für die Photovoltaik- und Elektronikindustrie eingesetzt werden.

Polysilicium-Granulat wird in einem Wirbelschichtreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumpartikel als Keimpartikel (im weiteren Verlauf des Dokuments "Seed" genannt) kann das Verfahren kontinuierlich mit allen damit verbundenen Vorteilen betrieben werden. Als siliciumhaltiges Eduktgas sind Silicium-Halogenverbindungen (z. B. Chlorsilane oder Bromsilane), Monosilan (SiH₄), sowie Mischungen dieser Gase mit Wasserstoff beschrieben. Derartige Abscheideverfahren und Vorrichtungen hierzu sind beispielsweise aus US 4786477 A bekannt.

Siliciumabscheidung in einem Wirbelschichtreaktor mit Silanen (SiHₙX₄₋ₙ mit X=Halogen, n=0-4) findet üblicherweise bei Temperaturen zwischen 600°C und 1200°C statt. Zugasströme müssen aufgeheizt, Abgasströme und das feste Produkt (polykristallines Granulat) zur Reinigung bzw. Weiterverarbeitung abgekühlt werden.

Da bei der Herstellung von Polysilicium die Herstellkosten eine immer größere Bedeutung gewinnen, wäre es wünschenswert, Heizenergie einzusparen. Diesbezüglich werden im Stand der Technik bereits einige Vorschläge gemacht.

US 6827786 B2 offenbart einen Reaktor zur Herstellung von granularem Polysilicium, umfassend eine Heizzone unterhalb der Reaktionszone mit einem oder mehreren Rohren, die durch einen oder mehrere Heizer beheizt werden, einen Mechanismus, der Siliciumgranulat zwischen Heiz- und Reaktionszone hin und her pulsieren lässt, wobei dieser einen separaten Einlass zum Einbringen von siliciumfreien Gas in die Heizzone umfasst, einen separaten Einlass zum Einbringen von siliciumenthaltendem Gas in die Reaktionszone, und ein Heizmittel, um das siliciumfreie Gas auf eine Reaktionstemperatur zu erwärmen. Es ist bekannt, dass Wärme von dem abgezweigten Granulat mittels eines Wärmetauschers zurück gewonnen werden kann, indem eingehende Silane aufgeheizt werden. Ein Problem stellt jedoch dabei das Entstehen von Wandbelag durch das siliciumhaltige Gas dar, wenn die Wandtemperatur zu hoch ist. Das Granulat kann die Wärme auch durch direkten Kontakt mit dem siliciumhaltigen Gas an dieses abgeben.

US 2011212011 A1 offenbart ein Verfahren zur Herstellung von polykristallinem Siliciumgranulat, bei dem Abgaswärme dazu verwendet wird, Keimpartikel mittels Wärmetauschern aufzuheizen. US 2012207662 A1 offenbart einen Reaktor zur Herstellung von polykristallinem Silicium (Siemens-Verfahren, zylindrische Siliciumstäbe), bei dem Wärme von einem Kühlmittel zur Reaktorkühlung zurückgewonnen wird. Durch die Verwendung von heißem Wasser mit einer Temperatur über dem Siedepunkt des Kühlmittels und Druckreduzierung des heißen Wassers, wird ein Teil des heißen Wassers in Form von Dampf aus dem Reaktor entnommen und als Heizquelle für andere Anwendungen genutzt. DE 38 42 099 A1 offenbart ein Verfahren zur Herstellung von granulärem Polysilicium in einem Wirbelschichtreaktor, umfassend Fluidisierung von Siliciumpartikeln mittels eines zugeführten Fluidisierungsgases in einer Wirbelschicht, die auf eine Temperatur von 600-1200 °C aufgeheizt wird, Zugabe eines siliciumhaltigen Reaktionsgases und Abscheidung von Silicium auf den Siliciumpartikeln, wodurch sich granuläres Polysilicium bildet, das anschließend aus dem Reaktor abgeführt wird, sowie ein Abführen von Abgas dadurch gekennzeichnet, dass abgeführtes Abgas genutzt wird um in einem Wärmeüberträger ein wässriges Medium aufzuheizen.

Aus der beschriebenen Problematik ergab sich die Aufgabenstellung der Erfindung.

Die Aufgabe wird gelöst durch ein Verfahren zur Herstellung von granularem Polysilicium in einem Wirbelschichtreaktor, umfassend Fluidisierung von Siliciumpartikeln mittels eines zugeführten Fluidisierungsgases in einer Wirbelschicht, die auf eine Temperatur von 600-1200°C aufgeheizt wird, Zugabe eines siliciumhaltigen Reaktionsgases und Abscheidung von Silicium auf den Siliciumpartikeln, wodurch sich granulares Polysilicium bildet, das anschließend aus dem Reaktor abgeführt wird, sowie ein Abführen von Abgas, dadurch gekennzeichnet, dass abgeführtes Abgas genutzt wird, um mittels eines Doppelrohr- oder Rohrbündelwärmetauschers Fluidisierungsgas oder Reaktionsgas aufzuheizen.

Die Aufgabe wird ferner gelöst durch ein Verfahren zur Herstellung von granularem Polysilicium in einem Wirbelschichtreaktor, umfassend Fluidisierung von Siliciumpartikeln mittels eines zugeführten Fluidisierungsgases in einer Wirbelschicht, die auf eine Temperatur von 600-1200°C aufgeheizt wird, Zugabe eines siliciumhaltigen Reaktionsgases und Abscheidung von Silicium auf den Siliciumpartikeln, wodurch sich granulares Polysilicium bildet, das anschließend aus dem Reaktor abgeführt wird, sowie ein Abführen von Abgas, dadurch gekennzeichnet, dass abgeführtes Abgas genutzt wird, um in einem Wärmeübertrager ein wässriges Medium aufzuheizen, wobei das aufgeheizte wässrige Medium verwendet wird, um Strom oder Dampf zu erzeugen oder ein anderes Medium mit einer niedrigeren Temperatur als das aufgeheizte wässrige Medium aufzuheizen.

Vorzugsweise wird als Fluidisierungsgas H₂, N₂ Ar oder SiCl₄ eingesetzt. Beim siliciumhaltigen Reaktionsgas handelt es sich vorzugsweise um Silan (SiH₄₋ₙClₙ, n = 0-4) oder ein Gemisch aus-Silan und H₂, N₂, Ar oder SiCl₄.

Vorzugsweise heizt das Abgas in einem Wärmeübertrager einen Kühlwasserstrom auf, der nachfolgend dazu verwendet wird, Strom zu erzeugen oder ein Medium mit einer geringeren Temperatur aufzuheizen, oder der nachfolgend verdampft wird. Vorzugsweise wird abgeführtes Abgas genutzt, um in einem Wärmeübertrager einen Kühlwasserstrom aufzuheizen.

Weiterhin wird bevorzugt abgeführtes granulares Polysilicium verwendet, um das Fluidisierungsgas aufzuheizen.

Dazu wird besonders bevorzugt das granulare Polysilicium in einem Behälter oder in einer Rohrleitung vom Fluidisierungsgas umströmt und gibt dabei Wärme in direktem Kontakt an das Fluidisierungsgas ab.

Ebenso ist es bevorzugt, dass das Abgas dazu verwendet wird, Siliciumpartikel zu erwärmen, wobei der Wärmeübertrag dadurch erfolgt, dass die Siliciumpartikel in einem Behälter oder in einer Rohrleitung vom Abgas umströmt werden und dabei in direktem Kontakt Wärme vom Abgas aufnehmen.

In einer bevorzugten Ausführungsform erwärmt das Abgas beide zugeführten Gasströme, nämlich Fluidisierungsgas und Reaktionsgas, wobei zwei Wärmeübertrager zum Einsatz kommen.

Als Wärmeübertrager ist ein Doppelrohr- oder ein Rohrbündelwärmetauscher bevorzugt.

Die aus dem Reaktor über das Abgas abgeführte Wärme kann verwendet werden, um einen oder mehrere Zugasströme und zusätzlich das Seedmaterial aufzuwärmen.

Da der Abgasstrom auch staubförmiges Silicium enthält, welches in Wärmeübertragern zu Wandablagerungen neigt, sind bei der Auswahl der Wärmeaustauscher Apparate mit großen Strömungsquerschnitten zu bevorzugen. Bei der Aufheizung von Eduktgas mit dem Abgas werden Doppelrohr- oder Rohrbündelwärmetauscher eingesetzt.

Die Abgaswärme kann genutzt werden, indem das Abgas einen Behälter durchströmt, in dem Seedpartikel vorhanden sind, wodurch die Seedpartikel aufgeheizt werden. Anstatt eines Behälters kann auch eine Rohrleitung verwendet werden, durch die beide Stoffströme in direkten Kontakt gebracht werden und durch das diese vornehmlich im Gegenstrom fließen.

Die Erfindung sieht also vor, Abgaswärme zu nutzen, um Zugas aufzuheizen oder Dampf zu erzeugen. Weiterhin sieht die Erfindung vor, Granulat zur Dampferzeugung zu benutzen.
Es hat sich gezeigt, dass die Nutzung der Abgaswärme zur Medienaufheizung oder zur Dampferzeugung deutlich mehr zur Energieeffizienz des Prozesses beiträgt als die Nutzung der Abgaswärme des Granulats.

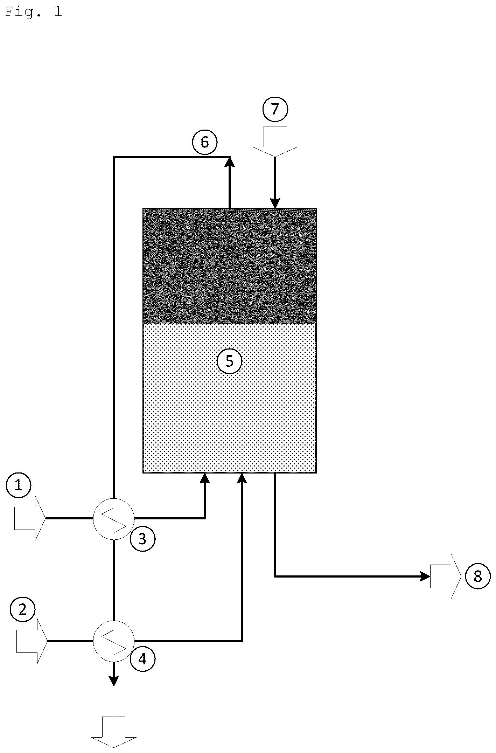

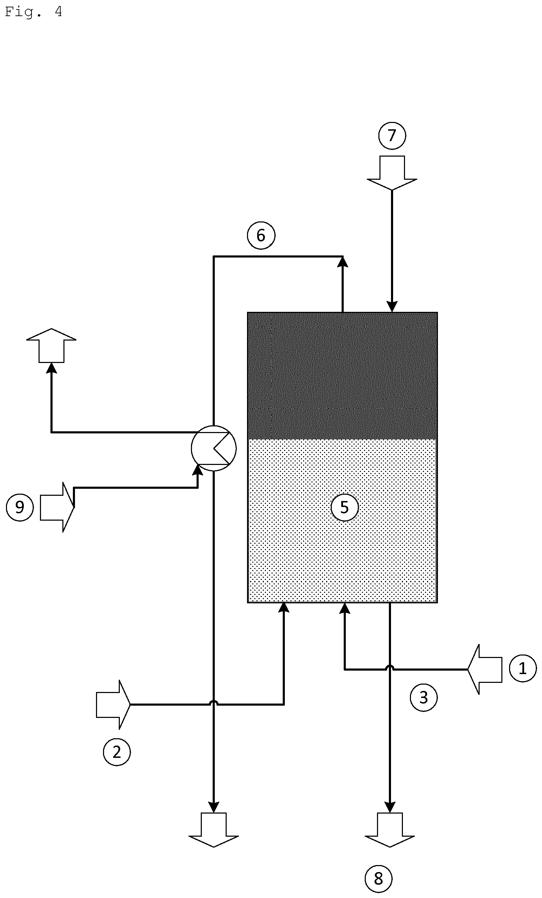

Die Erfindung wird nachfolgend anhand von **Beispielen** und anhand der **Fig. 1- 4** erläutert.

### Liste der verwendeten Bezugszeichen

**1** Zugasstrom 1
**2** Zugasstrom 2
**3** Wärmeübertrager 1
**4** Wärmeübertrager 2
**5** Wirbelschichtreaktor
**6** Reaktorabgas
**7** Seed
**8** Produkt-Granulat
**9** Kühlwasser

### Kurzbeschreibung der Figuren

**Fig. 1** zeigt schematisch, wie bei einem Wirbelschichtreaktor Abgas zum Aufheizen von Zugasströmen verwendet wird.
**Fig. 2** zeigt schematisch, wie bei einem Wirbelschichtreaktor Abgas zum Aufheizen von Seedpartikeln verwendet wird.
**Fig. 3** zeigt schematisch, wie bei einem Wirbelschichtreaktor Produktgranulat zum Aufheizen von Fluidisierungsgas verwendet wird.
**Fig. 4** zeigt schematisch, wie bei einem Wirbelschichtreaktor Abgas zum Aufheizen von Kühlwasser verwendet wird.

### Beispiele

Betrachtet wird ein Wirbelschichtprozess zur Silliciumabscheidung aus Trichlorsilan mit H₂ als Sekundärgas (Fluidisierungsgas).

Der Abscheideprozess findet bei einer Temperatur von 1000°C und einem Druck von 6 bar(abs) statt.

Der Stoffstrom von H₂ beträgt 24,66 kg/h.

Eine Trichlorsilan/H₂-Mischung mit einem Molanteil von 70% TCS wird als Primärgas (Reaktionsgas) mit einem Massenstrom von 875,55kg/h zugegeben.

Dieses darf auf maximal 350 °C vorgewärmt werden, um Siliciumabscheidungen in den Zuführungsleitungen zu vermeiden.

Im chemischen Gleichgewicht ergibt sich daraus bei einem Massenstrom von 860,81 kg/h Abgas eine Netto-Abscheiderate von 33,85 kg/h Silicium, wobei 5 % als Wandabscheidung im Reaktor und als Staub über den Abgasweg verloren gehen.

Es verbleibt eine Netto-Abscheiderate von 32,16 kg/h Silicium. Seedpartikeln werden mit einer Rate von 5 kg/h dem Reaktor zudosiert.

Es wird angenommen, dass das Abgas durch diverse gekühlte Einbauten und Wärmeverluste im Abgasrohr von 1000 °C auf 850 °C abkühlt.

Bei der Berechnung von k*A-Werten für Wärmeübertrager wird jeweils das Modell des Gegenstromwärmeübertragers zugrunde gelegt.

### Beispiel 1

In dieser Ausführungsform, die in **Fig. 1** schematisch dargestellt ist, wärmt das Abgas 6 beide zugeführten Gasströme 1 und 2 auf. Dazu kommen zwei Wärmeübertrager 3 und 4 zum Einsatz.

Der H₂-Strom 1 unterliegt keinem oberen Temperaturlimit, weshalb dieser in einem ersten Wärmeübertrager 3 bei einem höheren Temperaturniveau aufgeheizt wird.

Anschließend heizt das Abgas 6 das TCS/H₂-Gasgemisch (Zugasstrom 2) mittels Wärmeübertrager 4 auf eine Temperatur von ca. 350°C auf.

Insgesamt kann dem Prozess eine Wärmemenge von 136,9 kW rückgeführt werden.

Genaue Werte zu den Wärmeübertragern 3,4 sind **Tabelle 1** und **Tabelle 2** zu entnehmen.

**Tabelle 1** zeigt Daten des Wärmeübertragers 3.

**Tabelle 1**

| | | |
|---|---|---|
| Eintrittstemperatur Abgas | 850,00 | °C |
| Austrittstemperatur Abgas | 584,12 | °C |
| Eintrittstemperatur H₂ | 20,00 | °C |
| Austrittstemperatur H₂ | 800,00 | °C |
| Übertragene Wärme | 78,50 | kW |
| Delta T log | 212,16 | °C |
| k*A Wärmeübertrager | 370,00 | W/K |

**Tabelle 2** zeigt Daten des Wärmeübertragers 4.

**Tabelle 2**

| | | |
|---|---|---|
| Eintrittstemperatur Abgas | 584,12 | °C |
| Austrittstemperatur Abgas | 381,60 | °C |
| Eintrittstemperatur H₂/TCS | 20,00 | °C |
| Austrittstemperatur H₂/TCS | 350,00 | °C |
| Übertragene Wärme | 58,37 | kW |
| Delta T log | 293,26 | °C |
| k*A Wärmeübertrager | 199,03 | W/K |

Da das Abgas 6 auch Silicium-Feinstaub enthalten kann, sollte der Wärmeübertrager 3, 4 keine Geometrien mit zu engen Querschnitten aufweisen. Eingesetzt wird ein Doppelrohr- oder ein Rohrbündelwärmetauscher

### Beispiel 2

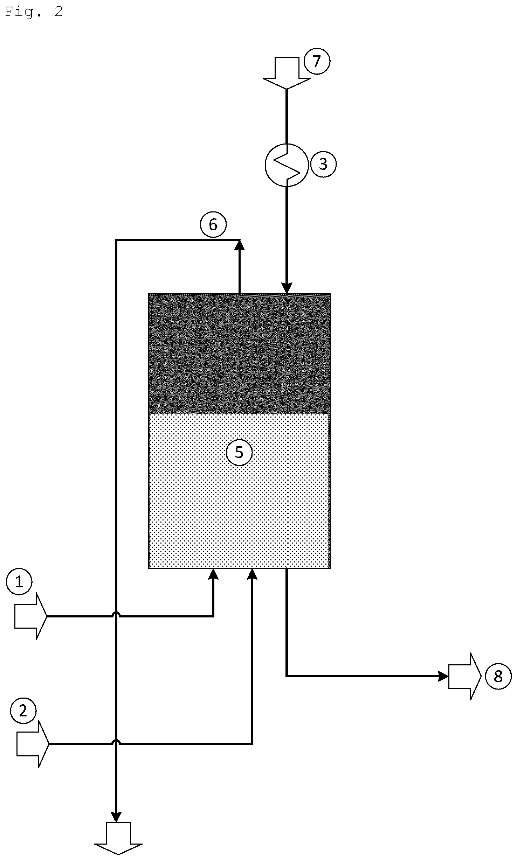

In dieser Ausführungsform, die in **Fig. 2** schematisch dargestellt ist, wärmt das Abgas 6 das zugeführte Seed 7 vor.

Es ist nur eine minimale Wärmemenge von 1,02 kW notwendig.

Die Wärme kann beispielsweise übertragen werden, indem der Behälter mit Seed 7 vom heißen Abgas 6 durchspült wird.

**Tabelle 3** zeigt Daten des Wärmeübertragers.

**Tabelle 3**

| | | |
|---|---|---|
| Eintrittstemperatur Abgas | 850,00 | °C |
| Austrittstemperatur Abgas | 846,58 | °C |
| Eintrittstemperatur Seed | 20,00 | °C |
| Austrittstemperatur Seed | 835,00 | °C |
| Übertragene Wärme | 1,02 | kW |
| Delta T log | 202,43 | °C |
| k*A Wärmeübertrager | 5,04 | W/K |

### Beispiel 3

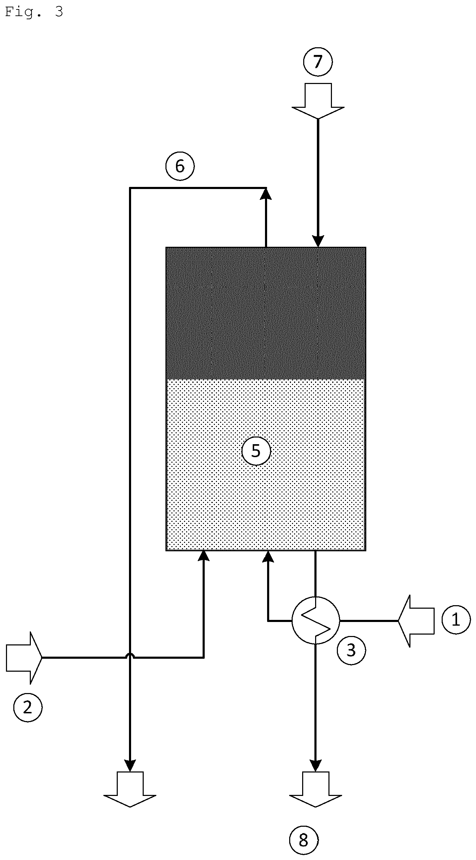

Dieses Beispiel ist in **Fig. 3** schematisch dargestellt. Es ist nicht Gegenstand des Patents, sondern lediglich zum Vergleich mit den anderen Szenarien aufgeführt.

Das Produktgranulat 8 mit einem Massenstrom von 37,16 kg/h (32,16 kg/h Nettoabscheidung + 5 kg/h Seed) wärmt den H₂-Zugasstrom 1 auf.

Es wird angenommen, dass das granulare Silicium 8 durch diverse gekühlte Einbauten und auf dem Weg zum Wärmeübertrager 3 von 1000 °C auf 900 °C abkühlt.

Im Wärmeübertrager 3 wird eine Wärmemenge von 8,22 kW übertragen.

Denkbar ist analog Beispiel 2 der Einsatz eines Produktbehälters, in welchem das heiße Granulat aus dem Reaktor vorzugsweise von H₂ durchströmt wird.

Es wird ersichtlich, dass über die Nutzung der Abgaswärme zur Feedvorwärmung eine um mehr als eine Größenordnung höhere Energiemenge rückgeführt werden kann als durch die Rückführung der Abwärme von Granulat 8.

**Tabelle 4** zeigt Daten des Wärmeübertragers.

**Tabelle 4**

| | | |
|---|---|---|
| Eintrittstemperatur H₂ | 20,00 | °C |
| Austrittstemperatur H₂ | 104,65 | °C |
| Eintrittstemperatur Granulat | 900,00 | °C |
| Austrittstemperatur Granulat | 25,00 | °C |
| Übertragene Wärme | 8,22 | kW |
| Delta T log | 155,91 | °C |
| k*A Wärmeübertrager | 52,74 | W/K |

### Beispiel 4

Der Abgasmassenstrom 6 heizt in einem Wärmeübertrager einen Kühlwasserstrom 9 auf.

Dieser steht unter einem Druck von 10 bar(abs) und wird bis auf 170°C erhitzt (Siedetemperatur: 180°C).

Das aufgeheizte Kühlwasser kann im Nachhinein beispielsweise zur Aufheizung von Medien mit geringem Temperaturniveau verwendet werden.

Gleichermaßen kann in einer nachfolgenden Blitzverdampfung des Wasserstroms oder durch Abgabe der Wärme in einem Verdampfer an einen Wasserstrom mit geringerem Druck Dampf zur Stromgewinnung erzeugt werden.

Es wird mit 211 kW im Vergleich mit den anderen Beispielen viel Wärme übertragen. Daher ist diese Ausführung besonders bevorzugt.
**Tabelle 5** zeigt Daten des Wärmeübertragers.

**Tabelle 5**

| | | |
|---|---|---|
| Massenstrom Kühlwasser | 1075 | kg/h |
| Eintrittstemperatur Kühlwasser | 20,00 | °C |
| Austrittstemperatur Kühlwasser | 170,00 | °C |
| Eintrittstemperatur Abgas | 850,00 | °C |
| Austrittstemperatur Abgas | 123,17 | °C |
| Übertragene Wärme | 210,51 | kW |
| Delta T log | 305,89 | °C |
| k*A | 688,18 | W/K |

## Patentansprüche

1. Verfahren zur Herstellung von granularem Polysilicium in einem Wirbelschichtreaktor, umfassend Fluidisierung von Siliciumpartikeln mittels eines zugeführten Fluidisierungsgases in einer Wirbelschicht, die auf eine Temperatur von 600-1200°C aufgeheizt wird, Zugabe eines siliciumhaltigen Reaktionsgases und Abscheidung von Silicium auf den Siliciumpartikeln, wodurch sich granulares Polysilicium bildet, das anschließend aus dem Reaktor abgeführt wird, sowie ein Abführen von Abgas, **dadurch gekennzeichnet, dass** abgeführtes Abgas genutzt wird, um mittels eines Doppelrohr- oder Rohrbündelwärmetauschers Fluidisierungsgas oder Reaktionsgas aufzuheizen.

2. Verfahren nach Anspruch 1, wobei als Fluidisierungsgas H₂, N₂ Ar oder SiCl₄ und als Reaktionsgas Silan (SiH₄₋ₙXₙ, n = 0-4, X=Halogen) oder eine Mischung aus Silan und H₂, N₂, Ar oder SiCl₄ eingesetzt wird.

3. Verfahren nach Anspruch 1 oder nach Anspruch 2, wobei weiterhin abgeführtes granulares Polysilicium verwendet wird, um das Fluidisierungsgas aufzuheizen.

4. Verfahren nach Anspruch 3, wobei das granulare Polysilicium in einem Behälter oder in einer Rohrleitung vom Fluidisierungsgas umströmt wird und dabei Wärme in direktem Kontakt an das Fluidisierungsgas abgibt.

5. Verfahren nach einem der Ansprüche 1 bis 4, wobei das Abgas dazu verwendet wird, Siliciumpartikel zu erwärmen, wobei der Wärmeübertrag dadurch erfolgt, dass die Siliciumpartikel in einem Behälter oder in einer Rohrleitung vom Abgas umströmt werden und dabei in direktem Kontakt Wärme vom Abgas aufnehmen.

6. Verfahren nach einem der Ansprüche 1 bis 2, wobei das Abgas beide zugeführten Gasströme, nämlich Fluidisierungsgas und Reaktionsgas, erwärmt, wobei zwei Doppelrohr- oder Rohrbündelwärmetauscher zum Einsatz kommen.

7. Verfahren zur Herstellung von granularem Polysilicium in einem Wirbelschichtreaktor, umfassend Fluidisierung von Siliciumpartikeln mittels eines zugeführten Fluidisierungsgases in einer Wirbelschicht, die auf eine Temperatur von 600-1200°C aufgeheizt wird, Zugabe eines siliciumhaltigen Reaktionsgases und Abscheidung von Silicium auf den Siliciumpartikeln, wodurch sich granulares Polysilicium bildet, das anschließend aus dem Reaktor abgeführt wird, sowie ein Abführen von Abgas, **dadurch gekennzeichnet, dass** abgeführtes Abgas genutzt wird, um in einem Wärmeübertrager ein wässriges Medium aufzuheizen, wobei das aufgeheizte wässrige Medium verwendet wird, um Strom oder Dampf zu erzeugen oder ein anderes Medium mit einer niedrigeren Temperatur als das aufgeheizte wässrige Medium aufzuheizen.

8. Verfahren nach Anspruch 7, wobei als Wärmeübertrager ein Doppelrohr- oder ein Rohrbündelwärmetauscher zum Einsatz kommt.

9. Verfahren nach Anspruch 7 oder nach Anspruch 8, wobei als Fluidisierungsgas H₂, N₂ Ar oder SiCl₄ und als Reaktionsgas Silan (SiH₄₋ₙXₙ, n = 0-4, X=Halogen) oder eine Mischung aus Silan und H₂, N₂, Ar oder SiCl₄ eingesetzt wird.

10. Verfahren nach einem der Ansprüche 7 bis 9, wobei weiterhin abgeführtes granulares Polysilicium verwendet wird, um das Fluidisierungsgas aufzuheizen.

11. Verfahren nach Anspruch 10, wobei das granulare Polysilicium in einem Behälter oder in einer Rohrleitung vom Fluidisierungsgas umströmt wird und dabei Wärme in direktem Kontakt an das Fluidisierungsgas abgibt.

12. Verfahren nach einem der Ansprüche 7 bis 11, wobei das Abgas dazu verwendet wird, Siliciumpartikel zu erwärmen, wobei der Wärmeübertrag dadurch erfolgt, dass die Siliciumpartikel in einem Behälter oder in einer Rohrleitung vom Abgas umströmt werden und dabei in direktem Kontakt Wärme vom Abgas aufnehmen.

## Claims

1. Process for producing granular polysilicon in a fluidized-bed reactor, comprising fluidizing silicon particles by means of a fed fluidizing gas in a fluidized bed which is heated up to a temperature of 600-1200°C, addition of a silicon-containing reaction gas and deposition of silicon on the silicon particles, whereby granular polysilicon is formed which is then removed from the reactor, and also a removal of off-gas, **characterized in that** off-gas that is removed is used for heating up fluidizing gas or reaction gas using a twin-tube, or a tube-bundle heat exchanger.

2. Process according to Claim 1, wherein, as fluidizing gas H₂, N₂, Ar or SiCl₄, and as reaction gas silane (SiH₄₋ₙXₙ, n = 0-4, X=halogen) or a mixture of silane and H₂, N₂, Ar or SiCl₄ is used.

3. Process according to Claim 1 or according to Claim 2, wherein, in addition, granular polysilicon that is removed is used for heating up the fluidizing gas.

4. Process according to Claim 3, wherein fluidizing gas flows round the granular polysilicon in a container or in a pipe, and in this process heat is released to the fluidizing gas in direct contact.

5. Process according to any one of Claims 1 to 4, wherein the off-gas is used for heating silicon particles, wherein the heat exchange proceeds by the means that off-gas flows round the silicon particles in a container or in a pipe, and in the process the silicon particles take up heat from the off-gas in direct contact.

6. Process according to any one of Claims 1 to 2, wherein the off-gas heats both the gas streams that are fed, namely fluidizing gas and reaction gas, wherein two twin-tube, or tube-bundle heat exchangers are used.

7. Process for producing granular polysilicon in a fluidized-bed reactor, comprising fluidizing silicon particles by means of a fed fluidizing gas in a fluidized bed which is heated up to a temperature of 600-1200°C, addition of a silicon-containing reaction gas and deposition of silicon on the silicon particles, whereby granular polysilicon is formed which is then removed from the reactor, and also a removal of off-gas, **characterized in that** off-gas that is removed is used for heating up an aqueous medium in a heat exchanger, wherein the aqueous medium that is heated up is used for generating electricity or steam or for heating up another medium having a temperature lower than the aqueous medium that is heated up.

8. Process according to Claim 7, wherein, as heat exchanger, a twin-tube, or a tube-bundle heat exchanger is used.

9. Process according to Claim 7 or according to Claim 8, wherein, as fluidizing gas H₂, N₂, Ar or SiCl₄, and as reaction gas silane (SiH₄₋ₙXₙ, n = 0-4, X=halogen) or a mixture of silane and H₂, N₂, Ar or SiCl₄ is used.

10. Process according to any one of Claims 7 to 9, wherein, in addition, granular polysilicon that is removed is used for heating up the fluidizing gas.

11. Process according to Claim 10, wherein fluidizing gas flows round the granular polysilicon in a container or in a pipe, and in this process heat is released to the fluidizing gas in direct contact.

12. Process according to any one of Claims 7 to 11, wherein the off-gas is used for heating silicon particles, wherein the heat exchange proceeds by the means that off-gas flows round the silicon particles in a container or in a pipe, and in the process the silicon particles take up heat from the off-gas in direct contact.

## Revendications

1. Procédé de fabrication de polysilicium granulaire dans un réacteur à lit fluidisé, comprenant la fluidisation de particules de silicium au moyen d'un gaz de fluidisation introduit dans un lit fluidisé, qui est porté à une température de 600 à 1 200 °C, l'ajout d'un gaz de réaction contenant du silicium et le dépôt de silicium sur les particules de silicium, formant ainsi un polysilicium granulaire, qui est ensuite déchargé du réacteur, ainsi qu'un déchargement de gaz d'échappement, **caractérisé en ce que** le gaz d'échappement déchargé est utilisé pour chauffer le gaz de fluidisation ou le gaz de réaction au moyen d'un échangeur de chaleur à tube double ou à faisceau de tubes.

2. Procédé selon la revendication 1, dans lequel H₂, N₂, Ar ou SiCl₄ est utilisé en tant que gaz de fluidisation et un silane (SiH₄₋ₙXₙ, n = 0 à 4, X = halogène) ou un mélange d'un silane et d'H₂, N₂, Ar ou SiCl₄, en tant que gaz de réaction.

3. Procédé selon la revendication 1 ou selon la revendication 2, dans lequel le polysilicium granulaire déchargé est également utilisé pour chauffer le gaz de fluidisation.

4. Procédé selon la revendication 3, dans lequel le gaz de fluidisation s'écoule autour du polysilicium granulaire dans un contenant ou dans une canalisation, et de la chaleur est ainsi émise vers le gaz de fluidisation en contact direct.

5. Procédé selon l'une quelconque des revendications 1 à 4, dans lequel le gaz d'échappement est utilisé pour chauffer les particules de silicium, le transfert de chaleur ayant lieu par écoulement du gaz d'échappement autour des particules de silicium dans un contenant ou dans une canalisation, et absorption de chaleur depuis le gaz d'échappement en contact direct.

6. Procédé selon l'une quelconque des revendications 1 à 2, dans lequel le gaz d'échappement chauffe les deux courants gazeux introduits, à savoir le gaz de fluidisation et le gaz de réaction, deux échangeurs de chaleur à tube double ou à faisceau de tubes étant utilisés.

7. Procédé de fabrication de polysilicium granulaire dans un réacteur à lit fluidisé, comprenant la fluidisation de particules de silicium au moyen d'un gaz de fluidisation introduit dans un lit fluidisé, qui est porté à une température de 600 à 1 200 °C, l'ajout d'un gaz de réaction contenant du silicium et le dépôt de silicium sur les particules de silicium, formant ainsi un polysilicium granulaire, qui est ensuite déchargé du réacteur, ainsi qu'un déchargement de gaz d'échappement, **caractérisé en ce que** le gaz d'échappement déchargé est utilisé pour chauffer un milieu aqueux dans un échangeur de chaleur, le milieu aqueux chauffé étant utilisé pour générer un courant ou de la vapeur, ou pour chauffer un autre milieu ayant une température plus basse que le milieu aqueux chauffé.

8. Procédé selon la revendication 7, dans lequel un échangeur de chaleur à tube double ou à faisceau de tubes est utilisé en tant qu'échangeur de chaleur.

9. Procédé selon la revendication 7 ou selon la revendication 8, dans lequel H₂, N₂, Ar ou SiCl₄ est utilisé en tant que gaz de fluidisation et un silane (SiH₄₋ₙXₙ, n = 0 à 4, X = halogène) ou un mélange d'un silane et d'H₂, N₂, Ar ou SiCl₄, en tant que gaz de réaction.

10. Procédé selon l'une quelconque des revendications 7 à 9, dans lequel le polysilicium granulaire déchargé est également utilisé pour chauffer le gaz de fluidisation.

11. Procédé selon la revendication 10, dans lequel le gaz de fluidisation s'écoule autour du polysilicium granulaire dans un contenant ou dans une canalisation et de la chaleur est émise vers le gaz de fluidisation en contact direct.

12. Procédé selon l'une quelconque des revendications 7 à 11, dans lequel le gaz d'échappement est utilisé pour chauffer les particules de silicium, le transfert de chaleur ayant lieu par écoulement du gaz d'échappement autour des particules de silicium dans un contenant ou dans une canalisation, et absorption de chaleur depuis le gaz d'échappement en contact direct.
